# EUROPÄISCHE PATENTSCHRIFT

(11) **EP 2 100 016 B1**
(45) Veröffentlichungstag und Bekanntmachung des Hinweises auf die Patenterteilung: **25.03.2015**
(21) Anmeldenummer: 07819287.9
(22) Anmeldetag: 24.10.2007
(51) Int. Cl.: F02B 37/24, F02C 9/22, F02D 23/00

(54) **REGELVERFAHREN FÜR EINEN TURBOLADER EINER BRENNKRAFTMASCHINE SOWIE TURBOLADER**
REGULATING METHOD FOR A TURBOCHARGER OF AN INTERNAL COMBUSTION ENGINE, AND TURBOCHARGER
PROCÉDÉ DE RÉGULATION D'UN TURBOCOMPRESSEUR D'UN MOTEUR À COMBUSTION INTERNE, ET TURBOCOMPRESSEUR

(30) Priorität: 21.12.2006 DE 102006060813
(43) Veröffentlichungstag der Anmeldung: 16.09.2009
(73) Patentinhaber: BorgWarner, Inc., Auburn Hills, MI 48326-2872 (US)
(72) Erfinder: MÜLLER, Volker, 55578 Vendersheim (DE); CHRISTMANN, Ralf, 67657 Kaiserslautern (DE); SPINNER, Gerd, 55232 Alzey (DE)
(74) Vertreter: Schmitz, Hans-Werner
(86) Internationale Anmeldenummer: PCT/EP2007/009235
(87) Internationale Veröffentlichungsnummer: WO 2008/083771

(56) Entgegenhaltungen:
- EP-A- 1 031 713
- EP-A- 1 471 234
- WO-A-2004/027235
- DE-A1-102004 042 272
- FR-A- 2 882 576

## Beschreibung

Die Erfindung betrifft ein Regelverfahren für einen Abgasturbolader einer Verbrennungskraftmaschine, gemäß dem Oberbegriff des Anspruches 1 sowie einen Turbolader gemäß dem Oberbegriff des Anspruches7.

Bei bekannten Turboladern mit einer verstellbaren Turbinengeometrie (VTG) kann es zu einem Ladedruckabfall kommen, wenn mittels eines üblichen PID-Reglers und einer pneumatischen Steuerdose die VTG zu weit geschlossen wird. Überdies ergibt sich bei der Steuerdose in den Hubwerten der Betätigungsstange beim Druckanstieg und beim Druckabfall ein Hystereseeffekt, was insgesamt die Reglercharakteristik negativ beeinflusst.

DE 102004042272A offenbart eine Kaskadenregelung zum Einstellen eines Aktuators in einem Turbolader mit einem Signal. Die äußere Regelschleife steuert einen Druck basierend auf einer Druckdifferenz zwischen einem Solldruck und einem Messdruck. Die innere Regeschleife steuert eine Drehzahl basierend auf einer Drehzahldifferenz zwischen einer Solldrehzahl, die basierend auf der Druckdifferenz berechnet wird und einer gemessen Drehzahl. Das Signal wird schließlich basierend auf dieser Drehzahldifferenz berechnet.

Die Druckschrift WO 2004/027235A offenbart ein lineares Stellglied das basierend auf einem kompensierten Fehlersignal zwischen einem Sollladedruck und einem an einem Turbolader gemessenen Ladedruck eine einzustellende Position für die Leitschaufeln des Turboladers bestimmt.

Ferner bestimmt eine anpassbare Positionssteuertafel für den Turbolader eine Steuerposition für die Leitschaufeln des Turboladers basierend auf einer Motordrehzahl und einem Motordrehmoment. Ein Summierglied steuert das gesamte Turboladersystem auf der einzustellenden Position aus dem Stellglied und der Steuerposition aus der Steuertafel.

Die Druckschrift EP 1 031 713 A offenbart eine Steuereinheit für einen Turbolader, die eine Druckdifferenz aus einem empfangenen gemessenen Druck und einem Solldruck sowie ein Steuersignal aus der Druckdifferenz bestimmt.

Es ist daher Aufgabe der vorliegenden Erfindung, ein Regelverfahren der im Oberbegriff des Anspruches 1 angegebenen Art sowie einen Turbolader gemäß dem Oberbegriff des Anspruches 7 zu schaffen, mit denen es möglich ist, die genannten Hystereseeffekte der Steuerdose zumindest zu verringern und eine optimierte Stellungsregelung der Leitschaufeln der VTG zu erreichen.

Die Lösung dieser Aufgabe erfolgt durch die Merkmale des Anspruchs 1 bzw. des Anspruches 7.

Erfindungsgemäß ist es dementsprechend möglich, die Hystereseeffekte der Steuerdose zu minimieren sowie eine schnellere Ansprechzeit als auch eine genauere Stellungsregelung der Leitschaufeln der VTG zu erreichen.

Ferner ist es möglich, die optimierte Stellung für den Ladedruckaufbau der Leitschaufeln der VTG zu ermitteln und sonstige negative Einflüsse, wie diejenigen einer Abgasrückführung, zumindest zu reduzieren.

Die Unteransprüche 2 bis 6sowie 8 beinhalten vorteilhafte Weiterbildungen des erfindungsgemäßen Regelverfahrens bzw. des Turboladers.

Bei einer besonders bevorzugten Ausführungsform des erfindungsgemäßen Regelverfahrens wird eine Drei-Phasen-Strategie bzw. Vorgehensweise gewählt.

In der ersten Phase werden die Leitschaufeln der variablen Turbinengeometrie in Abhängigkeit vom jeweiligen Betriebspunkt auf die für diesen Betriebspunkt maximal mögliche Schließposition verfahren, was es ermöglicht, die Hysterese der Steuerdose zu vermeiden bzw. zumindest zu verringern.

In der optionalen Phase 2 des erfindungsgemäßen Regelverfahrens wird die variable Turbinengeometrie bzw. deren Leitschaufeln auf eine optimale Position vorgesteuert, die hauptsächlich aus der Drehzahl und dem Drehmoment des aufgeladenen Motors generiert wird. Vorzugsweise ist hierbei ein unterlagerter Positionsregelkreis aktiv.

In der dritten Phase des erfindungsgemäßen Regelverfahrens wird der Ladedruck geregelt, wobei vorzugsweise ein Ladedruck-Regelkreis und der unterlagerte Positions-Regelkreis aktiv sind.

Insgesamt wird durch das erfindungsgemäße Regelverfahren ein optimierter Ladedruckaufbau erreicht, wobei der erfindungsgemäße Turbolader hierfür entweder mit einer pneumatischen Steuerdose mit Positionssensorik oder alternativ mit einem elektrischen Stellglied versehen sein kann.

Weitere Einzelheiten, Vorteile und Merkmale der vorliegenden Erfindung ergeben sich aus nachfolgender Beschreibung von Ausführungsbeispielen anhand der Zeichnung. Darin zeigt:
- Fig. 1: ein Schaubild zur Erläuterung des erfindungsgemäßen Regelverfahrens,
- Fig. 2: ein weiteres Schaubild zur Erläuterung vorteilhafter Effekte des erfindungsgemäßen Regelverfahrens, und
- Fig. 3: eine schematisch stark vereinfachte Blockdarstellung eines erfindungsgemäßen Turboladers.

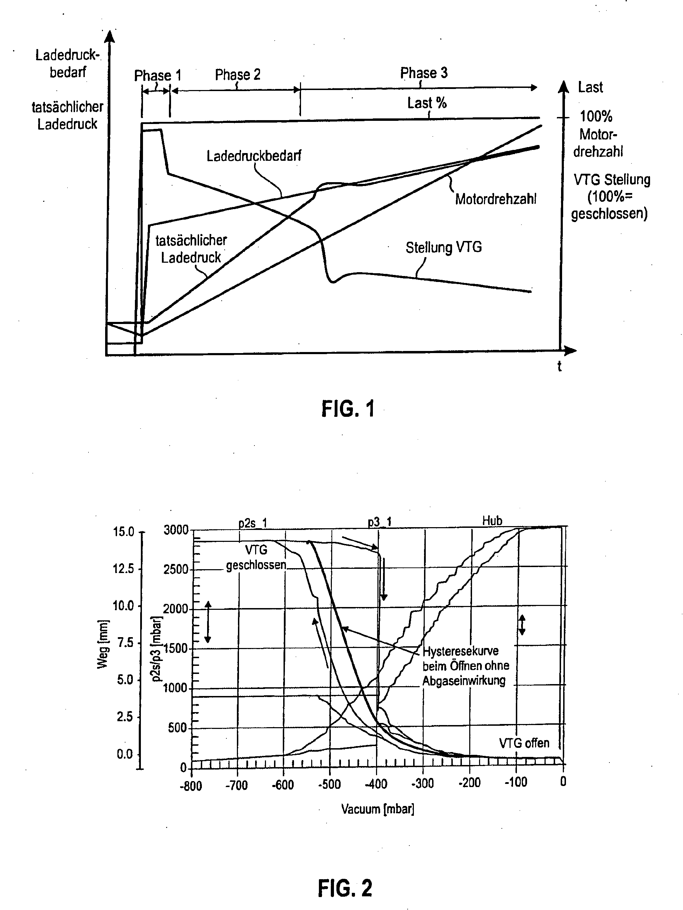

In Fig. 1 ist ein Schaubild dargestellt, in dem der Ladedruckbedarf, der tatsächliche Ladedruck, die Motorlast, die Motordrehzahl sowie die Stellung der Leitschaufeln der VTG über der Zeit aufgetragen sind, um eine besonders bevorzugte Ausführungsform des erfindungsgemäßen Regelverfahrens zu erläutern.

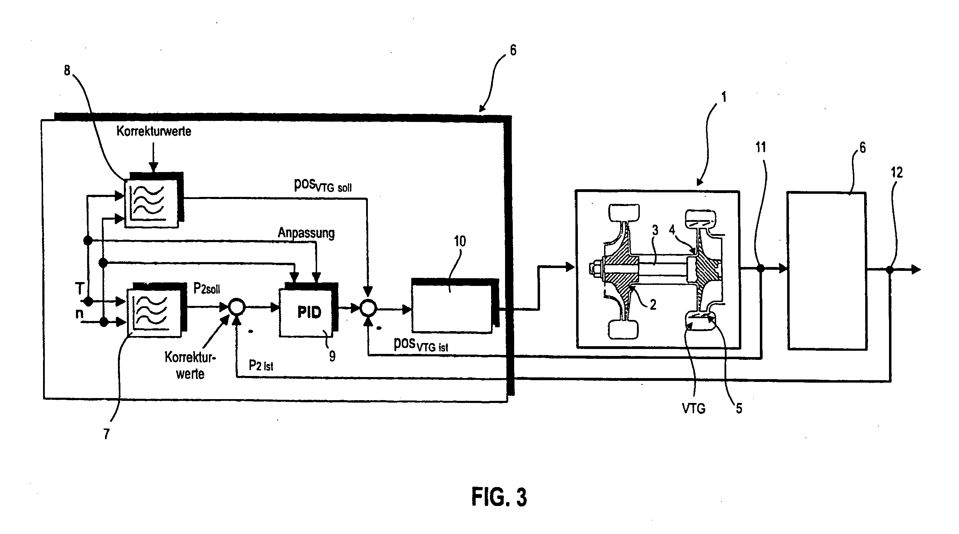

Die in Fig. 1 bildlich wiedergegebene Regelstrategie umfasst drei Phasen. In der Phase 1 wird angestrebt, den Abgasgegendruck P3, der in Fig. 2 vermerkt ist, zu erhöhen, um die Ansprechcharakteristik zu verbessern. Hierfür werden die Leitschaufeln der VTG kurzfristig auf den für den jeweils vorliegenden Betriebspunkt maximalen Schließzustand geregelt, wobei die Phase 1 nur für etwa 100 bis 200 ms, maximal 500 ms, aktiv ist. Wie sich aus dem Schaubild der Fig. 3 hierzu ergibt, wird in dieser Phase 1 eine Steuerung des Ladedrucks durchgeführt.

In der Phase 2 wird angestrebt, stets das beste Potential für den Ladedruckanstieg auszunutzen, wobei bevorzugterweise jedwede Verzögerung des Ansprechverhaltens, die bei üblichen Reglern mit geschlossenem Regelkreis auftreten kann, vermieden werden soll.

Die Leitschaufeln der VTG werden in dieser Phase 2 auf eine Position geregelt, die für den optimalen Ladedruckanstieg geeignet ist, der spezifisch für jeden Betriebspunkt ist. Hierbei werden eine Steuerung des Ladedrucks sowie eine Stellungsregelung der Leitschaufeln mit geschlossenem Regelkreis durchgeführt.

Die Phase 2 wird solange aktiviert, bis der Ladedruck nahezu seinen voreingestellten Wert erreicht hat.

In der Phase 3 wird ein stetiger und stabiler Betriebszustand angestrebt, wobei eine Standard-Ladedruckregelung mit geschlossenem Regelkreis sowie eine Stellungsregelung mit geschlossenem Regelkreis durchgeführt werden kann.

Vorzugsweise kann der Ladedruck mit Hilfe eines standardmäßigen PID-Reglers geregelt werden.

Fig. 2 stellt eine Zusammenfassung der zuvor erläuterten dreiphasigen Regelstrategie in Form eines Weg-Druck-Diagramms dar.

Wie zuvor erläutert, ist in der Phase 1 die VTG für eine kurze Zeit vollkommen geschlossen, um einen Anstieg des Abgas-Gegendrucks P3 so schnell wie möglich zu erreichen. Es wird hierbei eine VTG-Ladedrucksteuerung mit nicht geschlossenem Regelkreis durchgeführt.

In der Phase 2 werden eine VTG-Ladedrucksteuerung mit offenem Regelkreis und eine Positionsregelung mit geschlossenem Regelkreis durchgeführt. Hierbei wird die VTG auf die Position eingestellt, die den schnellsten Ladedruckanstieg ermöglicht. Optimale VTG-Stellungen können archiviert werden.

In der Phase 3 werden schließlich eine Ladedruckregelung mit geschlossenem Regelkreis und eine Positionsregelung mit geschlossenem Regelkreis durchgeführt, wobei die Regelung mit geschlossenem Regelkreis vorzugsweise nur dann aktiv ist, falls der Sollwert des Ladedrucks nahezu erreicht ist.

In Fig. 3 ist ein schematisch stark vereinfachtes Blockdiagramm eines erfindungsgemäßen Turboladers 1 dargestellt, der ein Verdichterrad 2 aufweist, das über eine Rotorwelle mit einer Turbine 4 verbunden ist, die eine VTG mit Schaufeln 5 aufweist. Diese für die Erläuterung der Wirkprinzipien der erfindungsgemäßen Regelstrategie sowie des erfindungsgemäßen Turboladers sind in Block 1 der Fig. 3 schematisch vereinfacht dargestellt, da diese Darstellung für die Erläuterung der Prinzipien vorliegender Erfindung ausreicht. Natürlich weist der erfindungsgemäße Turbolader 1 je nach Anwendungsfall auch alle anderen Komponenten üblicher Turbolader auf, deren Erläuterung jedoch für die Zwecke der Beschreibung vorliegender Erfindung nicht erforderlich ist.

Der Turbolader 1 ist für die Aufladung einer Brennkraftmaschine, beispielsweise eines Otto- oder Dieselmotors 6 vorgesehen, der ebenfalls durch einen weiteren Block symbolisiert ist.

Der Turbolader 1 weist erfindungsgemäß eine Regelvorrichtung 6 auf, die folgende Komponenten umfasst:

Zunächst ist eine erste Bestimmungseinrichtung 7 vorgesehen, mit der ein Sollwert P2_{SOLL} für den Ladedruck P2 bestimmt werden kann. Hierfür werden an die Bestimmungseinrichtung 7 Drehzahl- und Drehmomentdaten des Motors 6 angelegt, die durch die Buchstaben n (Drehzahl) und T (Drehmoment) symbolisiert sind.

Diese Daten werden ebenfalls an eine zweite Bestimmungseinrichtung 8 angelegt, mit der Sollwerte der Stellung der VTG (Position VTG_{SOLL}) ermittelt werden.

Ein Ladedruck-Regler 9, der aufgrund der vorliegenden Differenz von p2soll und p2ist ein Ausgangssignal für die Positionsregelung liefert, ist in Reihe zur ersten Bestimmungseinrichtung 7 angeordnet, die in Parallelschaltung zur zweiten Bestimmungseinrichtung 8 vorgesehen ist.

An den Ladedruck-Regler 9 werden ebenfalls die Drehzahl- und Drehmomentwerte angelegt sowie die Soll-Werte P2_{SOLL} des Ladedrucks P2 und von einem Sensor 12 gegebenenfalls aufgenommene Ist-Werte des Ladedrucks P2_{IST}.

In Reihe zum Ladedruck-Regler 9 ist ferner ein Leitschaufelstellungs-Regler 10 vorgesehen, dem bei Aktivierung neben den vom Ladedruck-Regler 9 zugeführten Werten auch Soll-Werte der Stellung der Leitschaufeln 5 der VTG zugeführt sind, die in Fig. 3 mit dem Pfeil POS_{VTG} symbolisiert sind. Diese Werte können von einem Sensor 11 aufgenommen werden, der die Stellung der Leitschaufeln 5 ermitteln kann.

Zur Optimierung des erfindungsgemäßen Regelverfahrens durch die in Fig. 3 dargestellte Regelvorrichtung 6 ist es ferner möglich, Korrekturwerte zu berücksichtigen, die in Fig. 3 durch die jeweiligen Pfeile symbolisiert sind.

Optional kann zusätzlich eine weitere Phase ergänzt werden, die der Optimierung des Ladedruckaufbaus nach einem Schaltvorgang dient. Hierzu wird auf geeignete Weise geprüft, ob ein starker Abfall des angeforderten Drehmoments, wie bei Schaltvorgängen üblich, vorliegt. Anschließend werden die VTG-Leitschaufeln für eine festgelegte Zeitspanne (ca. 1 s), maximal jedoch bis zum Auftreten einer stark ansteigenden Drehmomentanforderung, in eine maximal zulässige Schließ-Stellung gebracht, um den Abfall des Ladedrucks in dieser Zeit zu minimieren. Alternativ kann anstelle der maximal zulässigen Schließ-Position auch die vor dem Drehmomentabfall vorliegende VTG-Stellung beibehalten werden.

In Ergänzung zur voranstehenden schriftlichen Offenbarung der Erfindung wird hiermit explizit auf die zeichnerische Darstellung der Erfindung in den Fig. 1 bis 3 Bezug genommen.

### Bezugszeichenliste

- 1: Turbolader
- 2: Verdichter
- 3: Rotorwelle
- 4: Turbine
- 5: Leitschaufeln der variablen Turbinengeometrie VTG
- 6: Regelvorrichtung
- 7: Erste Bestimmungseinrichtung
- 8: Zweite Bestimmungseinrichtung
- 9: Ladedruck-Regler
- 10: Leitschaufelstellungs-Regler
- 11, 12: Sensoren

## Patentansprüche

1. Regelverfahren für einen Turbolader (1) mit einer Turbine (4), die eine mit verstellbaren Leitschaufeln (5) versehene variable Turbinengeometrie (VTG) aufweist, gekennzeichnet durch folgende Verfahrensschritte:
a) Schließen der Leitschaufeln (5) der variablen Turbinengeometrie (VTG), in Abhängigkelt vom aktuellen Betriebspunkt der mittels des Turboladers (1) aufgeladenen Verbrennungskraftmaschine, auf die für diesen Betriebspunkt maximal mögliche Schließposition der Leitschaufeln (5),
b) Bestimmen einer optimalen Position der Leltschaufeln (5) der variablen Turbinengeometrie (VTG), zumindest überwiegend auf der Basis von Drehzahlwerten (n) und Drehmomentwerten (T) der aufgeladenen Verbrennungskraftmaschine,
c) Einstellen der Leitschaufeln (5) auf die so ermittelte optimale Position, und
d) Regeln des Ladedrucks (P2) durch Einstellung der Position der Leitschaufeln (5) In einem geschlossenen Regelkreis.

2. Regelverfahren nach Anspruch 1, **dadurch gekennzeichnet, dass** der Verfahrensschritt d) hinsichtlich Leitschaufelstellungs-Regelung und der Ladedruckregelung In einem geschlossenen Regelkreis durchgeführt wird.

3. Regelverfahren nach Anspruch 2, **dadurch gekennzeichnet, dass** nach Abfall des Drehmoments aufgrund eines Schaltvorgangs, die VTG-Leitschaufeln für eine bestimmte Zeitspanne von ca. maximal einer Sekunde in eine maximal zulässige Schließ-Stellung gebracht werden.

4. Regelverfahren nach Anspruch 1, **dadurch gekennzeichnet, dass** der Verfahrensschritt a) als Steuerung ausgeführt wird.

5. Regelverfahren nach Anspruch 1, **dadurch gekennzeichnet, dass** der Verfahrensschritt a) für die Dauer von ungefähr maximal 500 ms durchgeführt wird.

6. Regelverfahren nach einem der Ansprüche 2 bis 5, **dadurch gekennzeichnet, dass** die Verfahrensschritte c) und d) hinsichtlich der Ladedrucksteuerung in einem offenen Regelkreis und hinsichtlich der Leitschaufelstellungs-Regelung in einem geschlossenen Regelkreis ausgeführt werden.

7. Turbolader (1) für eine Verbrennungskraftmaschine (6), Insbesondere einen Otto- oder Dieselmotor
- mit einem Verdichter (2);
- mit einer über eine Rotorwelle (3) mit dem Verdichter (2) verbundenen Turbine (4), die eine variable Turbinengeometrie (VTG) mit verstellbaren Leitschaufeln (5) aufweist,
gekennzeichnet durch eine Regelvorrichtung (6) mit folgenden Komponenten:
• eine erste Bestimmungseinrichtung (7) zur Bestimmung eines Sollwerts (P2_{SOLL}) für den Ladedruck (P2) aus Drehzahl- und Drehmomentdaten (n, T) der Verbrennungskraftmaschine (6);
• eine zur ersten Bestimmungseinrichtung (7) parallel geschaltete zweite Bestimmungseinrichtung (8) zur Bestimmung der optimalen Position der Leitschaufeln (5) der variablen Turbinengeometrie (VTG), zumindest überwiegend auf der Basis von Drehzahlwerten (n) und Drehmomentwerten (T) der aufgeladenen Verbrennungskraftmaschine (6);
• einen Regler (9) zur Regelung des Ladedrucks (P2), der in Reihe zur ersten Bestimmungseinrichtung (7) geschaltet ist und den Ladedruck (P2) anhand der angelegten Drehzahl- und Drehmomentwerte (n, T) und des Sollwerts (P2_{SOLL}) des Ladedrucks und gegebenenfalls rückgeführter Ist-Ladedruckwerte (P2_{IST}) regelt; und
• ein Leitschaufelstellungs-Regler (10), der in Reihe zum Regler (9) geschaltet Ist und der die Leitschaufeln (5) der variablen Turbinengeometrie (VTG), In Abhängigkeit vom aktuellen Betrlebspunkt der mittels des Turboladers (1) aufgeladener Verbrennungskraftmaschine (6), auf die für diesen Betriebspunkt maximal mögliche Schließposition der Leitschaufein (5) schließt und der die Stellung der Leitschaufeln (5) der variablen Turbinengeometrie (VTG) anhand der von der zweiten Bestimmungseinrichtung (8) zugeführten Sollwerte (POS_{VTGSOLL}) der Leitschaufelstellung, der vom Regler (9) zugeführten Ausgangssignale und gegebenenfalls rückgeführter Ist-Werte (POS_{VTGIST}) der tatsächlichen Leitschaufelstellung auf die ermittelte optimale Position der Leitschaufeln (5) regelt.

8. Turbolader nach Anspruch 7, gekennzeichnet durch Sensoren (11, 12) für die Erfassung der Ist-Stellung der Leitschaufeln (POS_{VTGIST}) und des Ladedrucks (P2_{IST}).

## Claims

1. Regulating method for a turbocharger (1) having a turbine (4) which has a variable turbine geometry (VTG) which is provided with adjustable guide blades (5), **characterized by** the following method steps:
a) closing the guide blades (5) of the variable turbine geometry (VTG), as a function of the present operating point of the internal combustion engine which is supercharged by means of the turbocharger (1), to the maximum possible closed position of the guide blades (5) for said operating point,
b) determining an optimum position of the guide blades (5) of the variable turbine geometry (VTG) at least predominantly on the basis of rotational speed values (n) and torque values (T) of the supercharged internal combustion engine,
c) adjusting the guide blades (5) to the optimum position which is determined in this way, and
d) regulating the charge pressure (P2) by adjusting the position of the guide blades (5) in a closed regulating loop.

2. Regulating method according to Claim 1, **characterized in that** the method step d) with regard to regulating the guide blade position and regulating the charge pressure is carried out in a closed regulating loop.

3. Regulating method according to Claim 2, **characterized in that**, after a drop in torque on account of a shift process, the VTG guide blades are placed into a maximum permissible closed position for a certain time period of approximately a maximum of one second.

4. Regulating method according to Claim 1, **characterized in that** the method step a) is carried out as control.

5. Regulating method according to Claim 1, **characterized in that** the method step a) is carried out for a duration of approximately a maximum of 500 ms.

6. Regulating method according to one of Claims 2 to 5, **characterized in that** the method steps c) and d) are carried out, with regard to the control of the charge pressure, in an open regulating loop and are carried out, with regard to the regulating of the guide blade position, in a closed regulating loop.

7. Turbocharger (1) for an internal combustion engine (6), in particular a spark-ignition or diesel engine,
- having a compressor (2);
- having a turbine (4) which is connected to the compressor (2) via a rotor shaft (3) and which has a variable turbine geometry VTG with adjustable guide blades (5),
**characterized by** a regulating device (6) having the following components:
• a first determining device (7) for determining a nominal value (P2_{NOMINAL}) for the charge pressure (P2) from rotational speed and torque data (n, T) of the internal combustion engine (6);
• a second determining device (8), which is connected in parallel with the first determining device (7), for determining the optimum position of the guide blades (5) of the variable turbine geometry (VTG) at least predominantly on the basis of rotational speed values (n) and torque values (T) of the supercharged internal combustion engine (6);
• a regulator (9) for regulating the charge pressure (P2), which regulator (9) is connected in series with the first determining device (7) and regulates the charge pressure (P2) on the basis of the input rotational speed and torque values (n, T) and the nominal value (P2_{NOMINAL}) of the charge pressure and, if appropriate, fed-back actual charge pressure values (P2_{ACTUAL}) ; and
• a guide blade position regulator (10) which is connected in series with the regulator (9) and which closes the guide blades (5) of the variable turbine geometry (VTG), as a function of the present operating point of the internal combustion engine (6) which is supercharged by means of the turbocharger (1), to the maximum possible closed position of the guide blades (5) for this operating point, and which regulates the position of the guide blades (5) of the variable turbine geometry (VTG) on the basis of the nominal values (POS_{VTG_NOMINAL}) of the guide blade position supplied by the second determining device (8), the output signals supplied by the regulator (9) and, if appropriate, fed-back actual values (POS_{VTG_ACTUAL}) of the actual guide blade position, to the optimum position of the guide blades (5) which is determined.

8. Turbocharger according to Claim 7, **characterized by** sensors (11, 12) for measuring the actual position of the guide blades (POS_{VTG_ACTUAL}) and the charge pressure (P2_{ACTUAL}).

## Revendications

1. Procédé de régulation pour un turbocompresseur (1) comprenant une turbine (4) qui présente une géométrie de turbine variable (VTG) pourvue d'aubes directrices réglables (5), **caractérisé par** les étapes de procédé suivantes :
a) fermeture des aubes directrices (5) de la géométrie de turbine variable (VTG), en fonction du point de fonctionnement actuel du moteur à combustion interne suralimenté au moyen du turbocompresseur (1), à la position de fermeture des aubes directrices (5) maximale possible pour ce point de fonctionnement,
b) détermination d'une position optimale des aubes directrices (5) de la géométrie de turbine variable (VTG), au moins essentiellement sur la base de valeurs de vitesse de rotation (n) et de valeurs de couple (T) du moteur à combustion interne suralimenté,
c) ajustement des aubes directrices (5) à la position optimale ainsi déterminée, et
d) régulation de la pression de suralimentation (P2) par ajustement de la position des aubes directrices (5) dans un circuit de régulation fermé.

2. Procédé de régulation selon la revendication 1, **caractérisé en ce que** l'étape de procédé d) est mise en oeuvre en vue de la régulation de la position des aubes directrices et de la régulation de la pression de suralimentation dans un circuit de régulation fermé.

3. Procédé de régulation selon la revendication 2, **caractérisé en ce qu'**après la chute du couple due à une opération de commutation, les aubes directrices de la VTG sont amenées dans une position de fermeture maximale admissible pendant un intervalle de temps déterminé d'environ une seconde au maximum.

4. Procédé de régulation selon la revendication 1, **caractérisé en ce que** l'étape de procédé a) est mise en oeuvre sous forme de commande.

5. Procédé de régulation selon la revendication 1, **caractérisé en ce que** l'étape de procédé a) est mise en oeuvre pendant une durée d'environ 500 ms au maximum.

6. Procédé de régulation selon l'une quelconque des revendications 2 à 5, **caractérisé en ce que** les étapes de procédé c) et d) sont mises en oeuvre en vue de la commande de la pression de suralimentation dans un circuit de régulation ouvert et en vue de la régulation de la position des aubes directrices dans un circuit de régulation fermé.

7. Turbocompresseur (1) pour un moteur à combustion interne (6), en particulier un moteur à quatre temps ou un moteur diesel, comprenant :
- un compresseur (2) ;
- une turbine (4) connectée par le biais d'un arbre de rotor (3) au compresseur (2), laquelle présente une géométrie de turbine variable (VTG) avec des aubes directrices réglables (5),
**caractérisé en ce que** par un dispositif de régulation (6) ayant les composants suivants :
- un premier dispositif de détermination (7) pour déterminer une valeur de consigne (P2_{SOLL}) pour la pression de suralimentation (P2) à partir de données de vitesse de rotation et de couple (n, T) du moteur à combustion interne (6) ;
- un deuxième dispositif de détermination (8) monté en parallèle avec le premier dispositif de détermination (7) pour déterminer la position optimale des aubes directrices (5) de la géométrie de turbine variable (VTG), au moins essentiellement sur la base de valeurs de vitesse de rotation (n) et de valeurs de couple (T) du moteur à combustion interne suralimenté (6) ;
- un régulateur (9) pour réguler la pression de suralimentation (P2), lequel est monté en série avec le premier dispositif de détermination (7) et régule la pression de suralimentation (P2) à l'aide des valeurs de vitesse de rotation et de couple (n, T) appliquées et de la valeur de consigne (P2_{SOLL}) de la pression de suralimentation et éventuellement de valeurs de pression de suralimentation instantanées recirculées (P2_{IST}) ; et
- un régulateur de la position des aubes directrices (10), qui est monté en série avec le régulateur (9) et qui ferme les aubes directrices (5) de la géométrie de turbine variable (VTG), en fonction du point de fonctionnement actuel du moteur à combustion interne (6) suralimenté au moyen du turbocompresseur (1), à la position de fermeture des aubes directrices (5) maximale possible pour ce point de fonctionnement et qui régule la position des aubes directrices (5) de la géométrie de turbine variable (VTG) à l'aide des valeurs de consigne (POS_{VTGSOLL}) de la position des aubes directrices, fournies par le deuxième dispositif de détermination (8), des signaux de sortie fournis par le régulateur (9) et éventuellement de valeurs instantanées recirculées (POS_{VTGIST}) de la position effective des aubes directrices, à la position optimale déterminée des aubes directrices (5).

8. Turbocompresseur selon la revendication 7, **caractérisé par** des capteurs (11, 12) pour la détection de la position réelle des aubes directrices (POS_{VTGIST}) et de la pression de suralimentation (P2_{IST}).
